(19) **Europäisches Patentamt**
**European Patent Office**
**Office européen des brevets**

(11) Publication number : **0 306 295 B1**

(12) **EUROPEAN PATENT SPECIFICATION**

(45) Date of publication of patent specification :
29.01.92 Bulletin 92/05

(51) Int. Cl.⁵ : **A63G 31/00**

(21) Application number : **88308065.7**

(22) Date of filing : **31.08.88**

(54) Amusement device.

(30) Priority : **04.09.87 CA 546178**

(43) Date of publication of application :
**08.03.89 Bulletin 89/10**

(45) Publication of the grant of the patent :
**29.01.92 Bulletin 92/05**

(84) Designated Contracting States :
**DE ES FR GB GR IT NL SE**

(56) References cited :
**FR-A- 369 125**
**GB-A- 131 363**
**US-A- 2 780 460**
**US-A- 3 083 037**
**US-A- 3 085 354**
**US-A- 3 141 669**
**US-A- 4 402 500**

(73) Proprietor : **ALPHA DYNAMICS CORPORATION**
**202-1656 Duranleau Street Granville Island**
**Vancouver British Columbia V6H 3S4 (CA)**

(72) Inventor : **Rusu, Robert T.**
**301-2975 Laurel Street**
**Vancouver British Columbia, V5Z 3T4 (CA)**
Inventor : **O'Connor, David**
**1705-2045 Nelson Street**
**Vancouver British Columbia, V6G 1N7 (CA)**
Inventor : **Cadwallader, Walter**
**1050 Eden Crescent**
**Tsawwassen British Columbia, V4L 1W7 (CA)**
Inventor : **De Champlain, Michael**
**202-1656 Duranleau Street Granville Island**
**Vancouver British Columbia,V6H 3S4 (CA)**
Inventor : **Ottho, Ulf**
**268-66A Street**
**Tsawwassen British Columbia, V4L 1M5 (CA)**

(74) Representative : **Parry, Christopher Stephen et al**
**PAGE, WHITE & FARRER 54 Doughty Street**
**London WC1N 2LS (GB)**

## Description

This invention relates to amusement devices but more particularly to a spinning and rotating seating amusement device.

United States Patent No. 4,402,500 which issued to Coles discloses a combined spinning and rotating amusement device for simulating weightlessness. It includes a circular base having upright spaced apart stanchions extentions between which is rotatably and spinnably mounted, a seat intended to be occupied by the user. The spinning and rotating means includes a rotatable portion mounted between the extensions by joints intended to permit rotation about an horizontal axis while the spinnable portion is rotatably mounted on the rotating portion so as to rotate via joints about an axis normal to the axis of rotation of the rotatable portion.

It was found that because of the large number of interactive forces, such as gyroscopic and centrifugal forces acting on the rings, the aforementioned device tended to wobble and move around considerably in view of the vibrations being created.

Also, it was found the device became relatively unsafe in view of the close proximity of the rotating rings to the seat. At high rotational speed, the loss of grip by the user of the center or spinning rings could lead to injury.

Therefore there exists a requirement for an improved spinning and rotating seating amusement device which safer to use and less likely to cause injury to the user.

Accordingly, an object of the present invention is to provide an improved spinning and rotating seating amusement device which is completely stable and free of vibration.

Another object of the present invention is to provide an improved spinning and rotating seating amusement device which is hydraulically driven.

Yet another object of the present invention is to provide an improved spinning and rotating seating amusement device which provides a safer and more comfortable seating arrangement for the user.

According to an aspect of the present invention, there is provided a spinning and rotating seating amusement device, comprising :

a support stand having a base ;
a pair of upright members mounted on said support stand and at opposite ends thereof ;
a first ring supported by said upright members for rotation on an horizontal axis ;
a pair of support rings forming a frame and bisecting each other at right angles, said frame being supported by said first ring for rotation on a second axis at right angles to said horizontal axis ;
means centrally positioned in said frame for receiving a seat, said seat having means for securing a passenger thereon ;

bearing means connecting said frame to said first ring and said first ring to said upright members ;
characterised in that the device further comprises

hydraulic driving means located at one of said upright members for rotating said first ring and including balancing means to provide stable and vibration free operation,

in that the means for receiving a seat comprises a pair of bisecting crossbars each connected to one of the support rings,

and in that the seat includes a foot support (81) and the means for securing a passenger on the seat comprises a body hold-down assembly including a lap securing pad provided with a pair of handles, the body hold-down assembly being pivotably mounted to the foot support at a pivot point.

Particular embodiments of the invention will be understood in conjunction with the acompanying drawings in which :

Figure 1 is an isometric view of a complete amusement device according to the present invention ;
Figure 2 is a isometric view of a partially assembly amusement device ;
Figures 3a and 3b are isometric views of the hydraulic driving means according to a first and second embodiment of the invention ;
Figure 4 is a partially sectioned view of the hydraulic means of Figure 3a ;
Figure 5 is a partially sectioned view of the hydraulic means of Figure 3b ;
Figure 6 is an isometric view of the cage assembly used in supporting the user ;
Figure 7 is an illustrative side view of the seat arrangement ; and
Figure 8 is an illustrative view of the amusement device in a transport mode.

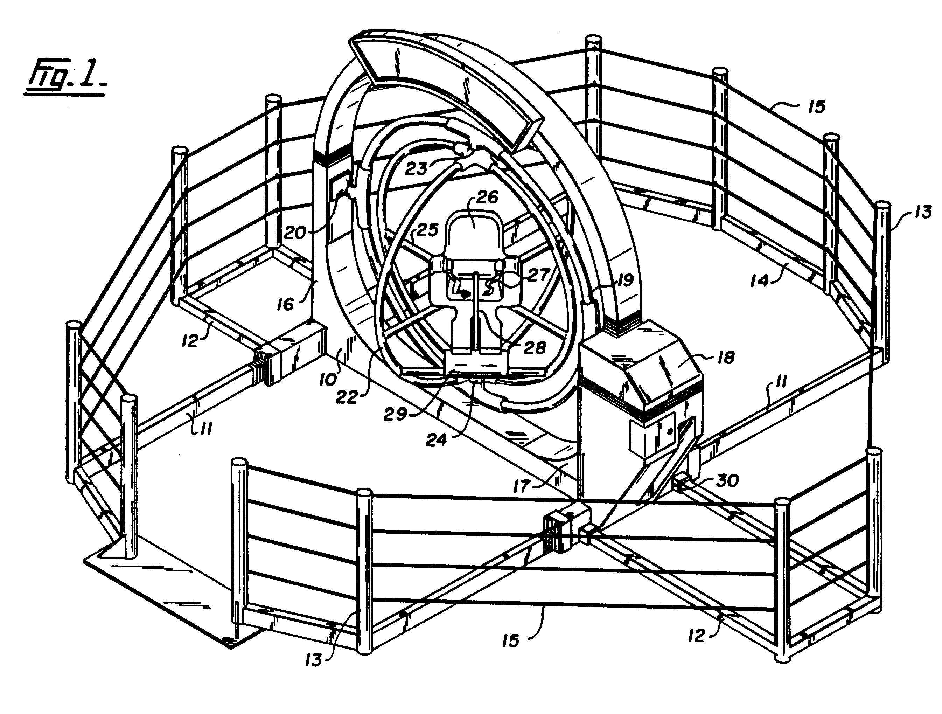

Referring now to Figure 1, we have shown a fully assembled spinning and rotating seating amusement device according to the present invention. The amusement device is basically comprised of a support stand 10 having a number of pivotably mounted front and rear support members 11 and side support members 12. A number of crowd control stanchions 13 are located at the distal ends of the support members 11 and 12. An additional set of extensions 14 are positioned between rearward support members 11 to form with crowd control cables 15, an inclosure defining a safety area.

On each side of support stand 10 is provided a pair of upright members 16 and 17. A control and hydraulic driving mechanism assembly 18 is provided at upright member 17. The assembly is used to rotate ring 19.

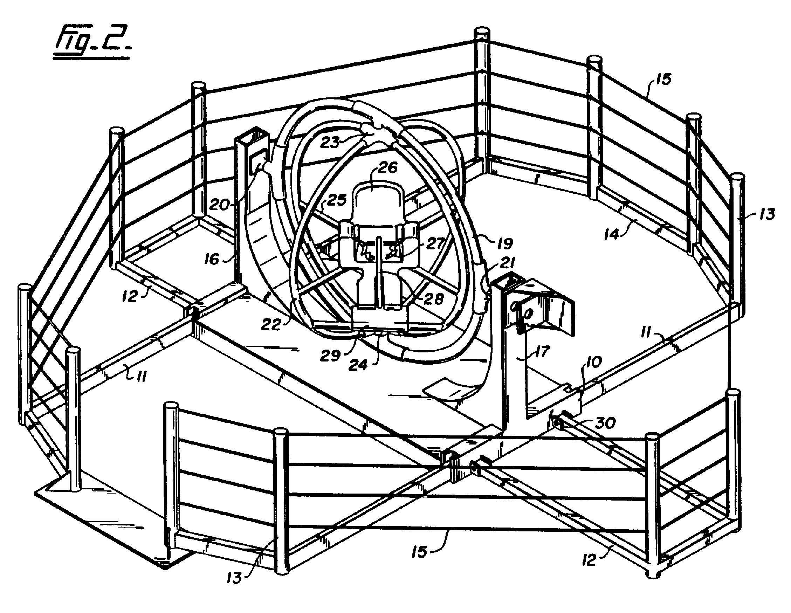

As more clearly shown in Figure 2, ring 19 is pivotably mounted to upright members 16 and 17 by means of pivotable joints 20 and 21 respectively.

Joints 20 and 21 allow ring 19 to rotate about an horizontal axis defined by the joints. Centrally located within ring 19 is a pair of support rings 22 forming a frame and bisecting each other at right angles. The frame is supported to ring 19 by means of pivotable joints 23 and 24. Frame 22 rotates on a second axis which lies at right angles to the horizontal axis defined by joints 20 and 21. A pair of bisecting crossbars 25 is centrally located within frame 22 and is adapted to receive a passenger seat 26. Securing means is provided to safely hold a passenger on seat 26. The securing means is comprised of a seatbelt 27, a body hold-down assembly 28 and a foot guard 29. As can be seen more clearly in Figure 2, side stabilizing bars 12 are hingedly mounted to frame 10 by means of a removable pin 30 which allows the disassembly of the crowd control extensions.

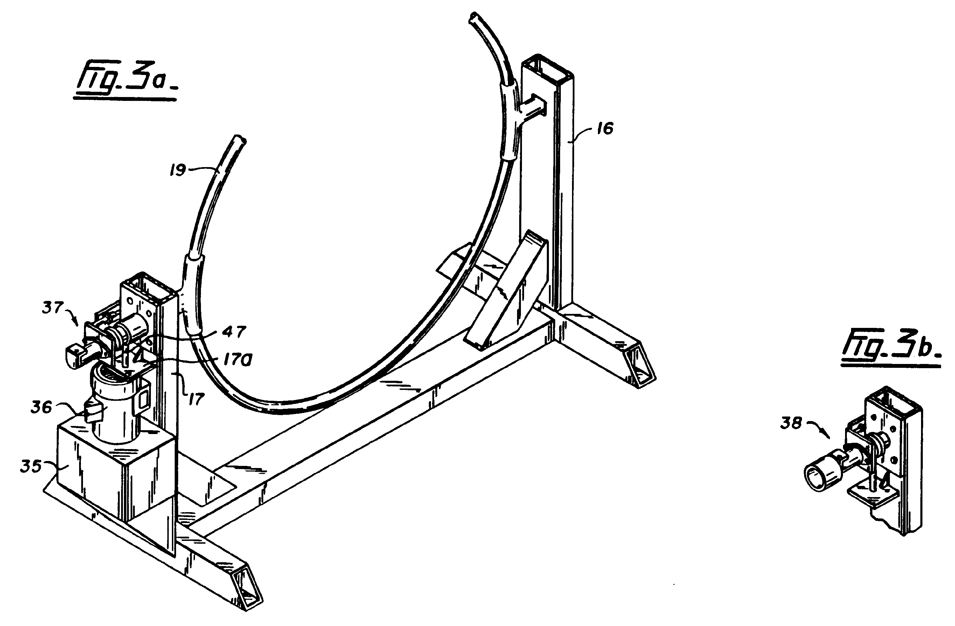

Referring now to Figures 3a and 3b, we have shown a first and second embodiment of the driving mechanism of the present invention. The basic hydraulic driving system is comprised of a fluid reservoir 35, a hydraulic pump 36 and hydraulic drive assembly 37. The hydraulic drive assembly 37 is securely mounted to upright member 17 and is adapted to rotate ring 19 at a predetermined speed.

The hydraulic assembly 38 shown in Figure 3b is a modified version of the hydraulic assembly 37 of Figure 3a as will be further described below.

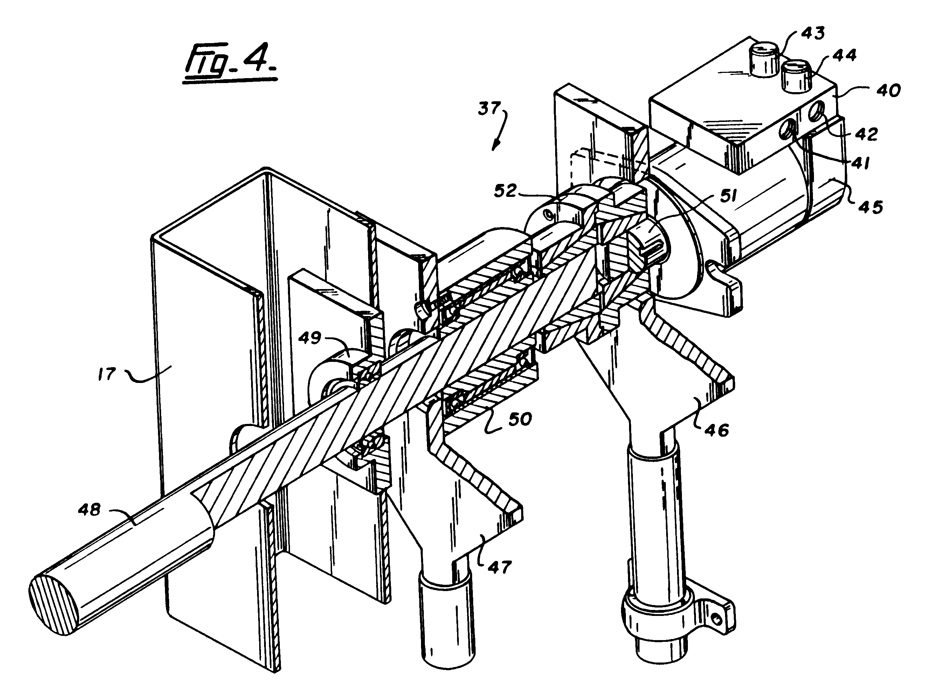

Referring now to Figure 4, we have shown a partially sectioned view of the hydraulic drive assembly 37 shown in Figure 3a. The assembly is basically comprised of a manifold 40 having fluid inlet 41 and outlet 42 and a pair of counter-balanced valves 43 and 44. Below manifold 40 is provided a hydraulic motor 45 adapted to receive fluid from and to pass fluid to manifold 40. The assembly is supported on upright member 17 by means of a pair of torque plates 46 and 47 lying adjacent upright member 17 and contacting plate 17a attached to member 17. A driving shaft 48 is supported onto upright member 17 by means of a flange bearing 49. Shaft 48 extends therethrough and is supported onto torque plate 47 by means of a cam clutch 50. Shaft 48 is then mechanically connected to output shaft 51 of hydraulic motor 45 by means of a tapered lock flange 52.

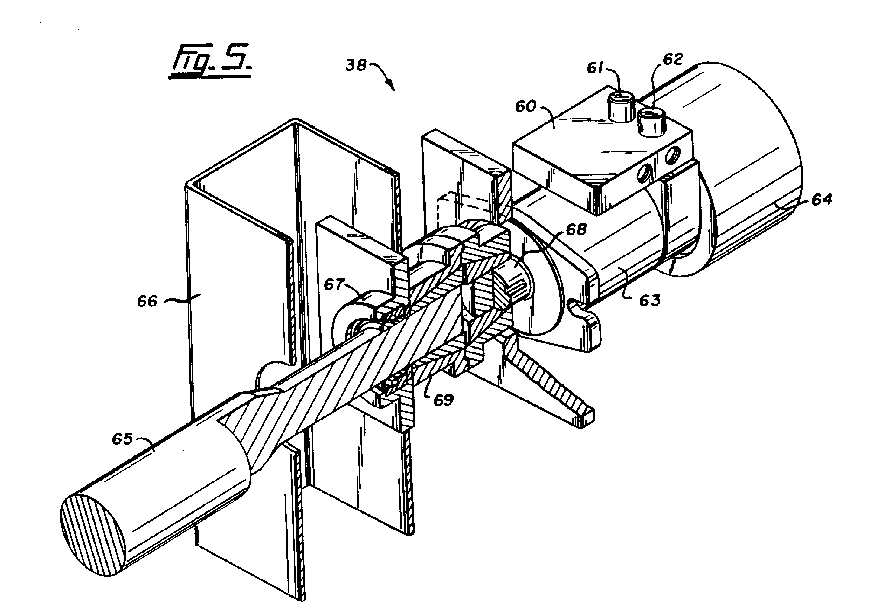

In the embodiment of Figure 5, an hydraulic drive and brake assembly, shown generally in Figure 3b, is shown partially sectioned. The assembly is similarly comprised with a manifold 60, a pair of counter-balanced valves 61 and 62 and a hydraulic motor 63. However, in this embodiment, a cam clutch 64 is attached to hydraulic motor 63.

Similarly, shaft 65 is supported onto an upright member 66 by means of a flange bearing 67. Shaft 65 is mechanically linked to output shaft 68 of motor 63 by means of a tapered lock flange 69.

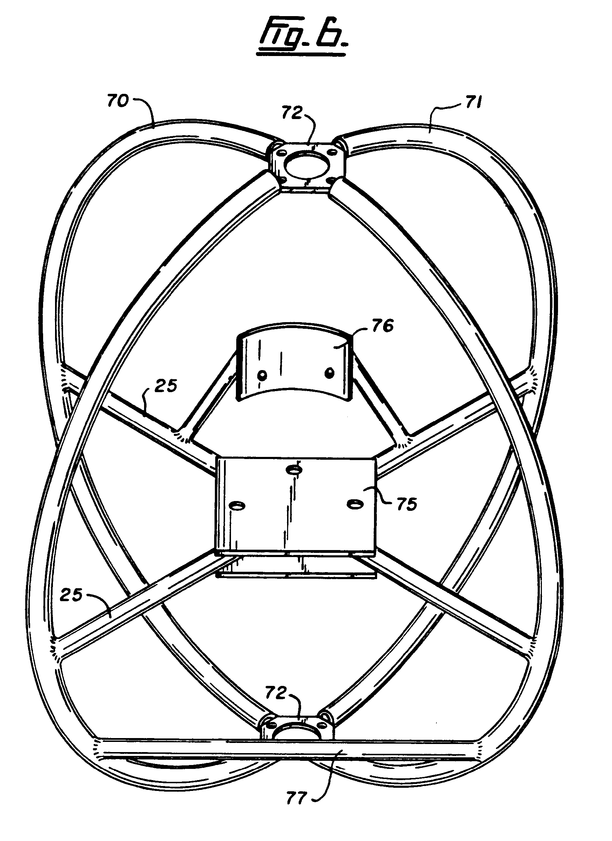

Referring now to Figure 6, we have shown an isometric view of the support rings forming a frame or seat carriage assembly. The assembly is comprised of a first and second ring 70 and 71 bisecting each other at right angles. A tube centering plate 72 is provided at the bisecting point and is used to support the cage assembly within ring 19 as shown in Figures 1 and 2.

The pair of crossbars 25 bisect each other at right angles and are fixedly mounted to rings 70 and 71 respectively. A bottom plate 75 is fixedly mounted at the bisecting point of crossbars 73 and 74 and is adapted to receive the passenger seat. A back plate 76 improves the overall structural integrity of the seat support arrangement. A third crossbar 77 extends laterally in the frontal section of the cage assembly between ring 70 and ring 71. Crossbar 77 is used to support the foot guard forming part of the passenger seat.

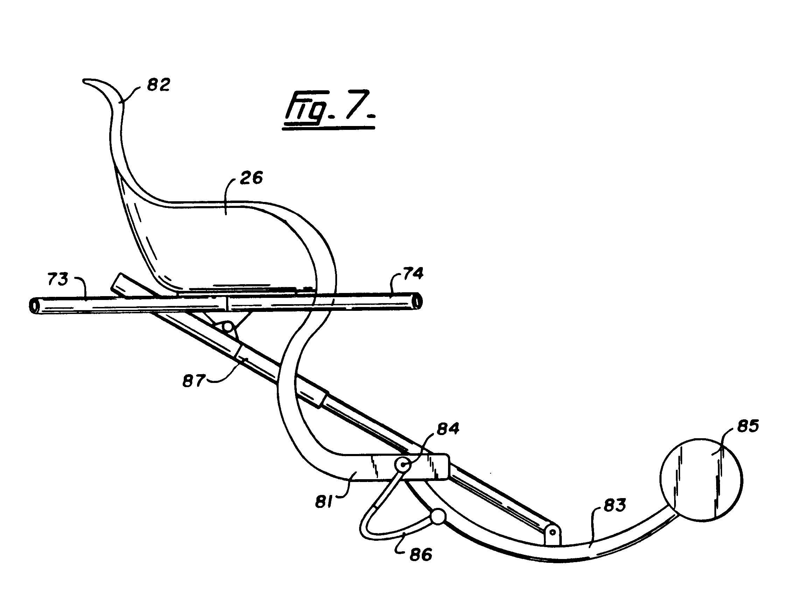

Referring now to Figure 7 we have shown a side view of the passenger seat assembly using the amusement device of the present invention. It is basically comprised of a seat 26 having a foot support 81 and a back rest 82. A body hold down assembly 83 is pivotably mounted to foot rest 81 at pivot point 84. The body hold down assembly is comprised of a lap securing pad 85 onto which can be provided a pair of handles and a foot guard 86. A piston assembly 87 is provided between seat 26 and body hold down assembly 83 and permits the easy opening and closing of the body hold down assembly when a passenger is seated. The seat and body hold down assembly are entirely supported onto crossbars 73 and 74.

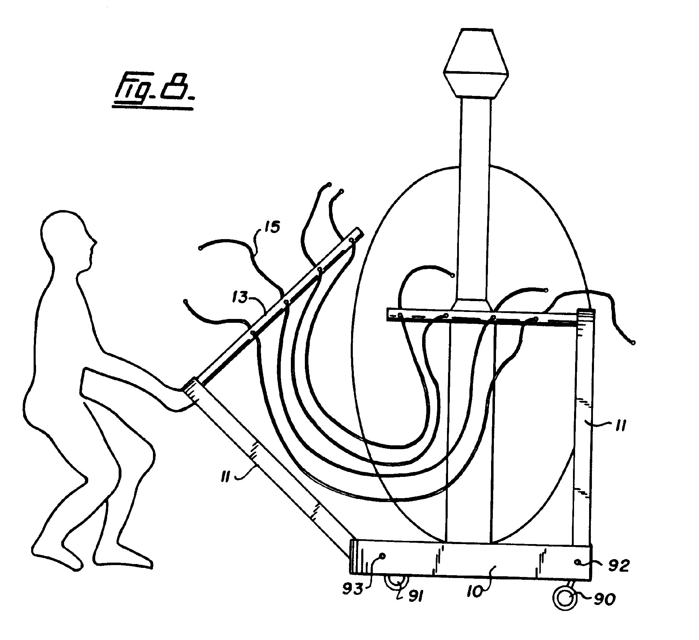

Referring now to Figure 8, we have shown an illustrative diagram of the improved amusement device of the present invention in the transport mode. As can be seen, when front and rear support members 11 and side support members 12 are pivoted, a set of wheels 90 and 91 become disengaged from under base 10 to allow easy transportation of the amusement device. Each support member and its corresponding wheel is pivotably mounted about a pivot point 92 and 93.

## Claims

1. A spinning and rotating seating amusement device, comprising :
   a support stand (10) having a base ;
   a pair of upright members (16, 17) mounted on said support stand and at opposite ends thereof;
   a first ring (19) supported by said upright members for rotation on an horizontal axis ;
   a pair of support rings (70, 71) forming a frame and bisecting each other at right angles, said frame being supported by said first ring for rotation on a second axis at right angles to said horizontal axis ;

means (25, 75) centrally positioned in said frame for receiving a seat, said seat (26) having means for securing a passenger thereon ;

bearing means (23, 24 ; 20, 21) connecting said frame to said first ring and said first ring to said upright members ;

characterised in that the device further comprises hydraulic driving means (35, 36, 37 ; 38) located at one of said upright members for rotating said first ring and including balancing means to provide stable and vibration free operation,

in that the means for receiving a seat comprises a pair of bisecting crossbars (25) each connected to one of the support rings (70, 71),

and in that the seat includes a foot support (81) and the means for securing a passenger on the seat comprises a body hold-down assembly (83) including a lap securing pad (85) provided with a pair of handles, the body hold-down assembly being pivotably mounted to the foot support at a pivot point.

2. An amusement device as defined in claim 1 wherein said passenger securing means further comprises a seat belt (27).

3. An amusement device as defined in claim 1 wherein said body hold-down assembly further comprises a piston assembly (87) provided between said seat (26) and said body hold-down assembly (83) to permit easy opening and closing of said assembly when a passenger is seated.

4. An amusement device as defined in claim 1, further comprising crowd control means (12, 13, 14, 15) adapted to be removably secured to the support stand wherein said crowd control means comprises a series of upright stanchions (13) defining a space around said stand, said stanchions being joined together by means of cables (15).

5. An amusement device as defined in claim 1 wherein said hydraulic driving means comprises a fluid container (35), a hydraulic pump (36) and an hydraulic driving assembly (37 ; 38).

6. An amusement device as defined in claim 5 wherein said hydraulic driving assembly (37) is comprised of a manifold (40) having fluid inlet and outlet means (41, 42) and a pair of power balanced valves (43, 44) thereon, said manifold being connected to the hydraulic pump, said pump being adapted to pump fluid in and out of said manifold, a hydraulic motor (45) having an output shaft (51) mechanically linked to a driving shaft (48) by means of a taper lock flange (52), said driving shaft being supported by means of torque plates (46, 47) lying adjacent to said at least one upright member (17), said driving shaft being supported to said upright member by means of a flange bearing (49) and by means of a cam clutch (50).

7. An amusement device as defined in claim 5 wherein said hydraulic driving assembly (38) is comprised of a manifold (60) having fluid inlet and outlet, a pair of counter balanced valves (61, 62), a hydraulic motor (63) connecting a first shaft (68) to a driving shaft (65) by means of a tapered lock flange (69), said pump being mechanically linked to a cam clutch (64).

8. An amusement device as defined in claim 1 further comprising pivotably mounted wheels (90, 91) recessed in said base (10) and connected to a pair of support members (12) extending outwardly from said stand and pivotably mounted thereto, such that when said members are pivoted upwardly, said wheels will pivot downwardly to support said stand.

**Patentansprüche**

1. Umlaufende und sich drehende, mit Sitz versehene Vergnügungsvorrichtung, die folgendes umfasst :

ein Stützgestell (10), das ein Fundament hat ;

ein Paar von aufrechtstehenden Gliedern (16, 17), die an dem Stützgestell und an gegenüberliegenden Seiten davon angebracht sind ;

einen ersten Ring (19), der von den aufrechtstehenden Gliedern zur Drehung um eine horizontale Achse angebracht ist ;

ein Paar von Stützringen (70, 71), die einen Rahmen bilden und sich rechtwinklig gabeln, wobei der Rahmen von dem ersten Ring zur Drehung um eine zweite Achse rechtwinklig zu der horizontalen Achse unterstützt wird ;

ein zentral in dem Rahmen gelagertes Mittel (25, 75), um einen Sitz aufzunehmen, wobei der Sitz (26) ein Mittel zum Befestigen eines Passagiers darauf hat ;

ein Lagermittel (23, 24 ; 20, 21), das den Rahmen mit dem ersten Ring und den ersten Ring mit den aufrechtstehenden Gliedern verbindet ; dadurch gekennzeichnet, dass die Vorrichtung weiterhin ein hydraulisches Antriebsmittel (35, 36, 37 ; 38) umfasst, das an einem der aufrechtstehenden Gliedern angeordnet ist, um den ersten Ring zu drehen, und das ein Ausgleichsmittel einschliesst, um stabilen und vibrationsfreien Betrieb zu liefern,

dass das Mittel zur Aufnahme eines Sitzes ein Paar von sich gabelnden Querstäben (25) umfasst, die je mit einem der Stützringe (70, 71) verbunden sind,

und dass der Sitz eine Fuss-Stütze (81) einschliesst, und das Mittel zum Befestigen eines Passagiers auf dem Sitz ein Körperhaltebauteil (83) umfasst, das ein Schossbefestigungspolster (85) einschliesst, das mit einem Paar von Haltegriffen versehen ist, wobei das Körperhaltebauteil schwenkbar an einem Schwenkpunkt auf der Fuss-Stütze gelagert ist.

2. Wie in Anspruch 1 definierte Vergnügungsvorrichtung, worin das Passagierbefestigungsmittel weiterhin einen Sitzgurt (27) umfasst.

3. Wie in Anspruch 1 definierte Vergnügungsvorrichtung, worin das Körperhaltebauteil weiterhin ein Kolbenbauteil (87) umfasst, das zwischen dem Sitz (26) und dem Körperhaltebauteil (83) vorgesehen ist, um leichtes Öffnen und Schliessen des Bauteils zu gestatten, wenn ein Passagier sitzt.

4. Wie in Anspruch 1 definierte Vergnügungsvorrichtung, die weiterhin ein Mengenkontrollmittel (12, 13, 14, 15) umfasst, das abnehmbar an dem Stützgestell angebracht ist, worin das Mengenkontrollmittel eine Reihe von aufrechtstehenden Stützen (13) umfasst, die einen Raum um das Gestell definieren, wobei die Stützen mit Hilfe von Kabeln (15) miteinander verbunden sind.

5. Wie in Anspruch 1 definierte Vergnügungsvorrichtung, worin die hydraulische Antriebsvorrichtung einen Flüssigkeitsbehälter (35), eine hydraulische Pumpe (36) und eine hydraulische Antriebsvorrichtung (37 ; 38) umfasst.

6. Wie in Anspruch 5 definierte Vergnügungsvorrichtung, worin die hydraulische Antriebsvorrichtung (37) ein Verteilerstück (40) mit Flüssigkeitseinlass- und Auslassmitteln (41, 42) und ein Paar von kraftausgeglichenen Ventilen (43, 44) umfasst, wobei das Verteilerstück mit der hydraulischen Pumpe verbunden ist, wobei die Pumpe angeordnet ist, Flüssigkeit in das Verteilerstück hinein und davon heraus zu pumpen, einen hydraulischen Motor (45) mit einer Ausgangswelle (51), die mechanisch mit einer Antriebswelle mit Hilfe eines verjüngten Schliessflansches (52) verbunden ist, wobei die Antriebswelle mit Hilfe von Drehmomentplatten (46, 47), die neben wenigstens einem aufrechtstehenden Glied (17) liegen, unterstützt wird, wobei die Antriebswelle mit Hilfe eines Flanschlagers (49) und mit Hilfe einer Nockenkupplung (50) an dem aufrechtstehenden Glied unterstützt ist.

7. Wie in Anspruch 5 definierte Vergnügungsvorrichtung, worin die hydraulische Antriebsvorrichtung (38) ein Verteilerstück (60) mit Flüssigkeitseinlässen und -auslässen umfasst, ein Paar von ausgeglichenen Ventilen (61, 62), einen hydraulischen Motor (63), der eine erste Welle (68) mit einer Antriebswelle (65) mit Hilfe eines verjüngten Schliessflansches (69) verbindet, wobei die Pumpe mechanisch mit einer Nockenkupplung (64) verbunden ist.

8. Wie in Anspruch 1 definierte Vergnügungsvorrichtung, die weiterhin in dem Fundament (10) eingesenkte, schwenkbar angebrachte Räder (90,91) umfasst, und die mit einem Paar von Stützgliedern (12), die sich nach aussen von dem Gestell erstrecken und schwenkbar daran angebracht sind, verbunden sind, so dass die Räder nach unten geschwenkt werden, wenn die Glieder nach oben geschwenkt werden, um das Gestell zu stützen.

**Revendications**

1. Une machine de divertissement à siège tournant et rotatif comprenant :
une tribune de soutènement (10) ayant une base ;
une paire de membres verticaux (16, 17) fixés sur ladite tribune de soutènement et aux extrémités opposées de celle-ci ;
un premier anneau (19) supporté par lesdits membres verticaux pour une rotation sur un axe horizontal ;
une paire d'anneaux porteurs (70, 71) formant un cadre et se bissectant l'un l'autre à angle droit, ledit cadre étant supporté par ledit premier anneau pour une rotation sur un second axe à angle droit par rapport audit axe horizontal ;
des moyens (25, 75) placés centralement sur ledit cadre pour recevoir un siège, ledit siège (26) disposant de moyens pour y tenir un passager ;
des moyens d'appui (23, 24 ; 20, 21) reliant ledit cadre audit premier anneau et ledit premier anneau auxdits membres verticaux ;
caractérisée en ce que la machine comprend aussi
des moyens d'entraînement hydraulique (35, 36, 37 ; 38) situés sur l'un desdits membres verticaux pour orienter ledit premier anneau et incorporant un moyen d'équilibre pour fournir une utilisation stable et sans vibration,
que le moyen devant recevoir un siège comprend une paire de traverses bissectrices (25) chacune étant reliée à l'un des anneaux porteurs (70, 71), et que le siège comprend un repose-pied (81) et le moyen d'attacher un passager sur le siège comprend un ensemble de retenue du corps (83) comprenant un coussinet d'attache sur genoux (85) incorporant une paire de poignées, l'ensemble de retenue du corps étant fixé de façon pivotante sur le repose-pied sur une articulation à pivot.

2. Une machine de divertissement comme il est défini dans la revendication 1 où ledit moyen de sécurité du passager comprend une ceinture de sécurité (27).

3. Une machine de divertissement comme il est défini dans la revendication 1 où ledit ensemble de retenue du corps comprend un ensemble piston (87) fourni entre ledit siège (26) et ledit ensemble de retenue du corps (83) pour permettre d'ouvrir et de fermer facilement ledit ensemble quand un passager se place.

4. Une machine de divertissement comme il est défini dans la revendication 1, comprenant aussi des moyens de contrôle de la foule (12, 13, 14, 15) adaptés pour se fixer amoviblement à la tribune de soutènement où le moyen de contrôle de la foule comprend une série de colonnes verticales (13) qui définissent l'espace autour de ladite tribune, lesdites colonnes étant jointes au moyen de câbles (15).

5. Une machine de divertissement comme il est défini dans la revendication 1 où ledit moyen d'entraînement hydraulique comprend un réservoir de fluide (35), une pompe hydraulique (36) et un ensemble d'entraînement hydraulique (37 ; 38).

6. Une machine de divertissement comme il est défini dans la revendication 5 où ledit ensemble d'entraînement hydraulique (37) se compose d'un collecteur (40) ayant des moyens d'entrée et de sortie de fluide (41, 42) et une paire de vannes à plateaux équilibreurs (43, 44) où ledit collecteur est raccordé à la pompe hydraulique, ladite pompe est adaptée pour pomper du fluide dudit collecteur, d'un moteur hydraulique (45) ayant un arbre de sortie (51) raccordé mécaniquement sur un arbre menant (48) au moyen d'un bride de verrouillage conique (52), ledit arbre menant est supporté au moyen de plateaux de torsion (46, 47) reposant en contigu à au moins undit membre vertical (17), ledit arbre menant étant supporté audit membre vertical au moyen d'un support à bride (49) et au moyen d'un embrayage à came (50).

7. Une machine de divertissement comme il est défini dans la revendication 5 ou ledit ensemble d'entraînement hydraulique (38) se compose d'un collecteur (60) ayant des moyens d'entrée et de sortie de fluide, d'une paire de vannes à plateaux équilibreurs (61, 62), d'un moteur hydraulique (63) reliant un premier arbre (68) sur un arbre menant (65) au moyen d'une bride vérrouillable conique (69), ladite pompe étant mécaniquement raccordée sur un embrayage à came (64).

8. Une machine de divertissement comme il est défini dans la revendication 1, comprenant aussi des roues (90, 91) montées de façon pivotante incorporées dans ladite base (10) et raccordées à une paire de membres d'appui (12) s'étendant vers l'extérieur de ladite tribune et montes de façon pivotante, de telle façon que quand lesdits membres sont pivotés vers le haut, lesdites roues pivotent vers le bas pour supporter ladite tribune.

Fig. 1.

Fig.2.

**Fig. 3b.**

**Fig. 3a.**

Fig. 4.

EP 0 306 295 B1

Fig. 5.

## Fig. 6.

EP 0 306 295 B1

_Fig. 7._

82

26

73

74

87

84

85

81

86

83

Fig. 8.